**Europäisches Patentamt**

(19) **European Patent Office**

**Office européen des brevets**

(11) Publication number : **0 429 180 B1**

(12) # EUROPEAN PATENT SPECIFICATION

(45) Date of publication of patent specification :
**15.06.94 Bulletin 94/24**

(51) Int. Cl.⁵ : **C23F 11/18**, C09D 5/08

(21) Application number : **90311592.1**

(22) Date of filing : **23.10.90**

(54) **Non-toxic corrosion inhibitive compositions and method for inhibiting corrosion.**

(30) Priority : **23.10.89 US 424938**
**30.08.90 US 575330**

(43) Date of publication of application :
**29.05.91 Bulletin 91/22**

(45) Publication of the grant of the patent :
**15.06.94 Bulletin 94/24**

(84) Designated Contracting States :
**AT BE CH DE DK ES FR GB GR IT LI LU NL SE**

(56) References cited :
**EP-A- 0 054 742**
**FR-A- 2 074 488**
**GB-A- 1 044 654**
**US-A- 3 024 100**
**US-A- 4 018 701**
**US-A- 4 867 944**
**DATABASE WPIL, Derwent Publications Ltd,**
**London (GB); no. 81-56058D**

(73) Proprietor : **COURTAULDS AEROSPACE, INC.**
**21800 Burbank Boulevard**
**P.O. Box 4266**
**Woodland Hills, California 91365-4266 (US)**
Proprietor : **LOCKHEED CORPORATION**
**4500 Park Granada Boulevard**
**Calabasas, CA 91399 (US)**

(72) Inventor : **Sharaby, Ahmed**
**29039 Flower Park Drive**
**Los Angeles, CA (US)**
Inventor : **Miller, Robert N.**
**7007 Yacht Club Drive**
**Acworth, GA 30101 (US)**

(74) Representative : **Silverman, Warren et al**
**HASELTINE LAKE & CO.**
**Hazlitt House**
**28 Southampton Buildings**
**Chancery Lane**
**London WC2A 1AT (GB)**

**Description**

The present invention relates to compositions and methods for inhibiting the corrosion and/or crack growth of metals when exposed to ambient conditions, particularly when exposed to aqueous salt solutions which are oftentimes present in the environment (.e.g. aqueous NaCl solutions).

The present invention relates particularly to inhibiting the corrosion of at least two metal parts which have a joint or space therebetween formed by the opposing mating surfaces of said metal parts which are secured together.

In an attempt to prevent the corrosion of metal parts, the joint or space formed by the interface between said metal parts (particularly aluminum and/or an aluminum alloy) is oftentimes filled with a liquid polymer which is then cured to an elastomeric solid which helps to prevent aqueous salt solutions, as well as oxygen, from coming into contact with the mating surfaces of the metals which are joined. The problem of corrosion of aluminum (including aluminum alloys) is a serious one particularly in the case of aircraft and ships since the metals making up the aircraft and/or ship are oftentimes made of a number of metals (including aluminum and/or aluminum alloys) which are dissimilar. With dissimilar metals, corrosion is a particularly serious problem. For example, in the case of aircraft, aluminum and/or aluminum alloys are secured together with rivets having a surface of cadmium, nickel, stainless steel, titanium, etc. As noted, this causes severe corrosion problems when the spaces or joints between such rivets and panels are exposed to aqueous salt solutions, particularly in the presence of oxygen. The same is equally true of ships which have aluminum or aluminum alloy superstructures joined to steel hulls.

In the past, exclusion of aqueous salt solutions, electrical insulation and sacrificial anodes between dissimilar metals have been the primary means employed to control corrosion of such metals. The large stresses and movements of the structures of both aircraft and ships have made the use of elastomeric sealants and/or coatings the preferred material to both exclude aqueous salt solutions and accommodate structural movements. In practice, however, many interfaces of metal structures sealed or coated with elastomers become permanently contaminated with aqueous salt solutions which seriously attack and weaken structural components by corrosion and/or crack growth of the metals.

In addressing this problem, U.S. Patents 3,730,937 and 3,841,896 utilize toxic chromates as corrosion inhibitive compounds. While the corrosion inhibitive chromate containing polysulfide coatings and sealants as disclosed in these patents, inhibited exfoliation corrosion of fastener holes as well as faying surfaced corrosion between adjacent exterior panels to thereby greatly extend the operational life of the metal structures, e.g. aircraft and the like; there is a growing concern with difficulties encountered in the disposal of the toxic chromate containing waste associated with such corrosion inhibitive compounds.

Because of the toxicity problem with chromates, other compounds have been investigated to reduce corrosion of metals, such compounds including sodium nitrate, sodium molybdate and sodium metasilicate. However, in order to achieve the same level of corrosion inhibition that is provided by chromate containing coatings and sealants, approximately five times as much of the non-toxic inhibitive compound had to be added to the sealant material. Moreover, when formulations containing these non-toxic corrosion inhibitor compounds are added to, for example, polysulfide sealants, the cure rate of the polysulfide sealant material is adversely effected, resulting in either a non-acceptable acceleration or retardation of the cure. While encapsulation of these inhibitor compounds has been proposed as a solution to the cure problem, it is both an expensive as well as time-consuming process.

As has been noted, in addition to corrosion, metallic structures which are cyclically stressed, such as aircraft, ships and the like, suffer from environmentally enhanced fatigue cracking. For example, the rate of fatigue cracking of high strength aluminum in a salt water environment is more than double that experienced in a dry desert-like environment. Environmentally enhanced fatigue cracking is, essentially, a hydrogen embrittlement phenomena and can be related to the corrosion process. When water reacts with a metal such as aluminum, the corrosion products are aluminum hydroxide and hydrogen. In a fatigue cracking situation, this nascent atomic hydrogen migrates to the zones of maximum stress at the crack tip and, by its physical presence, decreases the force required to pull grains apart. Research has shown that the best corrosion inhibitors, such as the chromates, have little effect on the rate of fatigue cracking of metals such as aluminium alloys once a crack has initiated.

Reference may also be made to JP-A-79148845 as summarised in DATABASE WPIL, no. A-56058D, which discloses an epoxy resin moulding material comprising an ammonium salt of phosphoric acid which inhibits the corrosion of metal electrodes.

The use of ammonium salts, including phosphates and water soluble molybdates in protecting aluminium from corrosion is known from US-A-3,024,100. Finally, according to US-A-4,867,944 corrosion of carbon steel is inhibited by the use of a combination of a water soluble compound, a water soluble molybdate and water soluble orthophosphate and polyphosphate.

According to the present invention there is provided a method of inhibiting corrosion at a joint between two metal parts when exposed to aqueous salt solutions, the said joint being present between the opposing mating surfaces of said metal parts, which comprises filling said joint with a liquid polymer composition curable to a solid sealant elastomer, said composition consisting essentially of a liquid polymer curable to a solid elastomeric sealant, said liquid polymer having incorporated therein a corrosion and crack growth inhibitive amount of cerous molybdate or a mixture of cerous molybdate and at least one water soluble ammonium salt of ortho-, meta- or hypophosphoric acid or ortho- or hypophosphorous acid.

This invention also provides a corrosion and/or crack growth inhibiting coating and sealing composition for application to metal surfaces comprising

(a) liquid polymer curable to a solid elastomer, and
(b) cerous molybdate, or
(c) cerous molybdate and at least one water soluble ammonium salt of ortho-, meta- or hypophosphoric acid or ortho- or hypophosphorous acid, components (c) or (b) being present in a corrosion and/or crack growth inhibitive amount.

The method of the present invention includes applying to the metal surfaces (e.g. as a coating) a corrosion and/or crack growth inhibitive composition which is in the form of a liquid polymeric sealing composition which is curable to an elastomer solid. Such elastomeric polymeric compositions include polysulfides, polythioethers, polyurethanes and polyethers. Particularly preferable are mercaptan terminated polymers such as those curable to solid elastomers.

The corrosion and/or crack growth inhibitive inorganic components of the composition of this invention are essentially non-toxic to the environment as well as unreactive with polymeric coatings and sealants, particularly elastomeric materials as aforesaid, so as to eliminate the detrimental effects of accelerating or decelerating the cure rate of the elastomeric polymer, The corrosion and crack growth inhibitive components of compositions of the present invention comprise (1) a mixture of (a) cerous molybdate and (b) at least one ammonium salt of phosphoric acid (ortho-, meta- or hypophosphoric acid) or ortho- or hypophosphorous acid (hereinafter sometimes referred to as the ammonium salts of phosphoric or phosphorous acid) or, (2) cerous molybdate.

Insofar as the invention relates to use of a mixture of (a) cerous molybdate and (b) at least one of the ammonium salts with a liquid polymer composition curable at an elastomeric coating or sealant, the resulting mixture is hereinafter sometimes referred to as cerous molybdate - ammonium salt liquid polymer composition. This is then applied directly to the metal to be protected, and, as the liquid polymer is curable to a solid elastomeric sealant, the resulting composition is hereinafter sometimes referred to a cerous molybdate - ammonium salt liquid elastomer composition.

Similarly the cerous molybdate corrosion and/or crack growth inhibitor may be applied, per se, to the metal to be protected mixed with a liquid polymer which is curable to a sealant or coating (hereinafter sometimes referred to as cerous molybdate liquid polymer composition). The liquid polymer is curable to a solid elastomeric sealant and the resulting composition is sometimes hereinafter referred to as cerous molybdate liquid elastomer composition. The cerous molybdate liquid elastomer composition is applied to the metal and the composition cured to an elastomeric solid.

It is presently believed that the corrosion inhibitive and/or crack growth inhibitive effects of the compositions of the present invention are enhanced by adding zinc chloride thereto. This is accomplished by forming a relatively homogenous mixture of zinc chloride with the inhibitive compositions of the present invention.

The composition of the present invention is particularly useful in preventing corrosion attack of aluminum and alloys by applying said compositions to interfaces of aluminum or aluminum alloys and dissimilar metals joined together or connected thereto. This may be accomplished by filling the spaces between the interface with a liquid polymer composition of the present invention and curing the liquid polymer to a solid. In the latter event, there is formed a solid elastomeric sealing or coating between the surfaces of the two dissimilar metals. This minimizes galvanic interaction between, e.g. aluminum and cadmium plated steel fasteners, a combination often found on modern day aircraft.

The beneficial corrosion inhibition effect of using one or more of the ammonium salts in a mixture of ammoniun salts with cerous molybdate in a curable resin matrix is particularly surprising in view of the fact that U.S. Patent No. 4,212,793 discloses that various alkaline salts of phosphoric acid and phosphorous acid, when added to a poly (arylene sulfide) resin prevents corrosion to the mold used in molding the resin, said corrosion being due to contact of the mold with sulfur dioxide. It has been found that the water soluble salts mentioned in the 4,212,793 United States patent (sodium hypophosphite and sodium triorthophosphate) do not have any significant effect, when incorporated into elastomers, in preventing corrosion of metals such as aluminum and/or aluminum alloys due to exposure to aqueous salt solutions.

Ammonium salts that have been found to be particularly effective in a mixture containing cerous molybdate or cerous molybdate and zinc chloride, are the ammonium salts of orthophosphoric acid and hypophosphorous acid. The preferred ammonium salts are ammonium hypophosphite and ammonium dihydrogen phosphate, including mixtures thereof. It is presently believed that incorporation of these ammonium salts in a liquid polymer which, preferably, is cured to an elastomeric solid when in contact with the metal part or parts, will alleviate pitting and corrosion, particularly crevice corrosion, of such metal parts as well as inhibiting crack growth. The present invention is believed to be very useful in preventing pitting, corrosion, and cracking of aluminum (including aluminum alloys) even when said surfaces are secured or coupled together by a fastener such as a rivet made of a dissimilar metal, e.g. titanium. Additionally, compositions of the present invention minimize galvanic interaction between aluminum and fasteners made of titanium and cadmium plated steel.

The presently preferred liquid polymers are polysulfides, polyurethanes, polythioethers and polyethers and the particularly preferred liquid polymers are those which are mercaptan terminated.

The present invention is particularly beneficial in elastomeric polymers which are cured using an alkaline oxidation catalyst. For example, most mercaptan terminated polymers are cured with an oxidation catalyst which is alkaline, either per se or by the addition of an alkaline material such as sodium hydroxide. In order to effect a cure of such polymers using most oxidation catalysts, the cure must be effected in an alkaline environment, i.e. the pH must be greater than 7.

Oxidation catalysts useful in curing the mercaptan terminated polymers which may be used in the present invention include organic and inorganic peroxides, (e.g. calcium peroxide) and oxides such as manganese dioxide. In the case of manganese dioxide, a slight amount (from about 0.5 to about 3 weight percent) of sodium hydroxide is added in order to make the catalyst effective. It is particularly surprising that the ammonium salts of the present invention achieve such excellent results because it would be expected that the sodium hydroxide present in the manganese dioxide catalyst would convert the ammonium salts to the corresponding sodium salts which, as noted above, have been shown to be relatively ineffective in reducing corrosion and/or inhibiting fatigue crack growth of metal parts when exposed to aqueous salt solutions.

As noted hereinbefore, the corrosion and crack growth inhibitive compounds used in the practice of the present invention have relatively low toxicity and, just as importantly, do not adversely affect the curing properties of the liquid polymers, which form a part of the coating and sealant compositions of the present invention.

In the description which follows, reference will be made to the accompanying drawings, wherein:

Fig. 1 is a potentiodynamic plot for untreated 7075-T6 aluminum in 3.5 weight percent NaCl;

Fig. 2 is a potentiodynamic plot for 7075-T6 aluminum in 3.5 weight percent NaCl and 0.05% $MgCrO4$; and

Fig. 3 is a potentiodynamic plot for 7075-T6 aluminum in 3.5 weight percent NaCl, about 0.018 weight percent cerous molybdate and about 0.015 weight percent sodium nitrate.

The cerous molybdate may be made by reacting cerous nitrate and sodium molybdate in an approximate stoichiometric ratio or approximately 1 to 1 by weight so as to provide a slight excess of cerous nitrate. The reaction is as follows:

$$3Na_2MoO_4 \cdot 2H_2O + 2Ce(NO_3)_3 \cdot 6H_2O \rightarrow Ce_2(MoO_4)_3 + 6NaNO_3 + 18H_2O.$$

The reaction is carried out by dissolving the cerous nitrate and sodium molybdate in a suitable aqueous solvent, such as, for example, distilled water. Preferably, just enough solvent is used to dissolve the cerous nitrate and sodium molybdate. The compounds are then combined in an approximate stoichiometric ratio to produce a yellow precipitate which is cerous molybdate. The cerous molybdate can be separated from the sodium nitrate by any suitable means, such as by filtration. However, it is not necessary to separate the two reaction products and they may be used together with no deleterious effect. In addition, cerous molybdate per se or the mixture of cerous molybdate and sodium nitrate may be mixed with the ammonium salts of phosphorous acid or phosphoric acid of this invention. However, it should be noted that when parts by weight are used it is calculated for cerous molybdate per se and not the mixture of cerous molybdate and sodium nitrate.

The cerous molybdate or the cerous molybdate - ammonium salt mixture is added to a liquid polymer composition which is then cured to a solid elastomeric sealant composition.

As has also been noted before, in the more preferred feature of the present invention, zinc chloride is used in conjunction with the compositions of the present invention.

When cerous molybdate is used per se and added to a liquid polymer composition, a sufficient amount of the cerous molybdate is added to provide corrosion and/or crack growth inhibition to metals such as aluminum. The amount necessary to achieve the desired result may vary depending'upon the particular polymer but this is easily determined by one skilled in the art following the teachings of the present invention. Generally speaking, the amount of cerous molybdate blended with a liquid polymer composition will be from .01 weight percent (e.g. .02 or .03 weight percent) to as high as 10 weight percent, the preferable amount being from 1 weight percent to 5 weight percent.

When mixing the cerous molybdate with the ammonium salts in the practice of the present invention, the amount of the resulting mixture added to the polymeric composition is such that the cerous molybdate added to said liquid polymer composition, is preferably 0.01 weight percent to 14 weight percent (e.g. from 0.01 weight percent to 10 weight percent) and, preferably, from 1 weight percent to 5 weight percent.

The weight ratio of cerous molybdate to ammonium salt will vary but generally speaking the weight ratio will be between 0.5:2 and 2:0.5.

The addition of the ammonium salts to a liquid polymer curable to a sealant or coating and more preferably to a liquid polymer curable to an elastomeric solid is believed to inhibit corrosion resistance and/or crack growth of metal parts coated or sealed with such liquid polymer compositions. More specifically, the ammonium salts eliminate the pitting and erratic dissolution of aluminum or aluminum alloy parts coupled with cadmium plated steel, stainless steel or titanium fasteners, when such parts and fasteners are coated and/or sealed with the liquid polymer compositions of the present invention and such compositions are cured to a solid, preferably to a solid elastomer.

From the foregoing, the amount of ammonium salt added to the liquid polymers in the practice of the present invention may vary. For example, in general, the amount of ammonium salts added to the liquid polymer is between one weight percent and 20 weight percent (based on the weight of the liquid polymer), with the preferred amounts being between 3 weight percent and 14 weight percent.

When zinc chloride is incorporated into the compositions of the present invention, the amount of zinc chloride added to either the cerous molybdate or the mixture of cerous molybdate and ammonium salts will be based on the weight of the cerous molybdate and may vary widely, e.g. the weight ratio of cerous molybdate to zinc chloride may be from about 0.5:2 to 2:0.5.

As noted hereinbefore, the particularly preferred polymers are polysulfides, polyethers, polythioethers and polyurethanes, particularly those which are mercaptan terminated and cured with an alkaline oxidation catalyst such as manganese dioxide, calcium peroxide, etc.

By "polysulfides" we mean polymers having disulfide linkages, a number of which are commercially available under the name Thiokol (Registered Trade Mark) polysulfides, such as those disclosed in U.S. Patent No. 2,466,963. Other polysulfide polymers useful in the present invention are disclosed in U.S. Patent Nos. 4,623,711 and 4,609,762. Both of these patents also disclose mercaptan terminated polysulfides. Polyurethane polymers useful in the present invention are well known in the art and are specifically disclosed in U.S. Patent No. 3,923,748 which also discloses mercaptan terminated polyurethanes.

Similarly, polythioether polymers are also known in the art and are, for example, disclosed in U.S. Patent No. 4,366,307. Mercaptan terminated polythioethers are also disclosed in this patent.

Polyethers useful in the present invention are known and are, for example, disclosed in U.S. Patent No. 4,366,307 which also discloses mercaptan terminated polyethers.

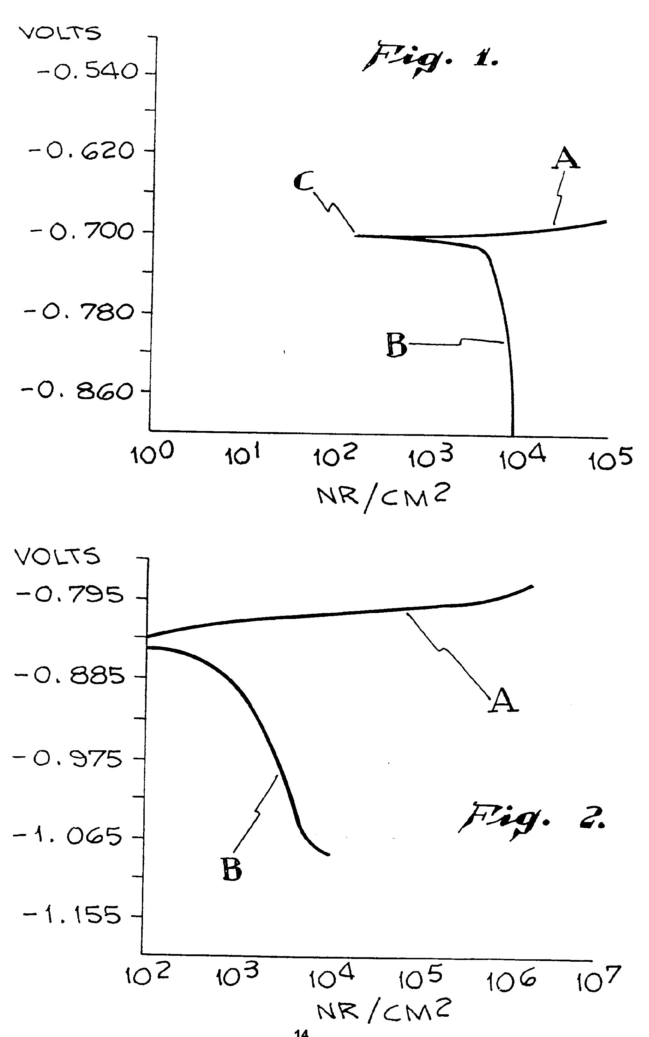

Referring to Fig. 1, a potentiodynamic plot for 7075-T6 aluminum in a solution of 3.5% NaCl is shown. The ordinate axis referencing the impressed voltage in volts while the abscissa axis references the corrosion current in na/cm$^2$. Leg A of the plot representing the anodic lobe and leg B of the plot representing the cathodic lobe. Point C represents the rest potential and is important when aluminum is coupled to another metal having a different galvanic potential. The samples shown in Fig. 1 experienced a corrosion rate of 3.35 mils/yr. (85μm/yr.)

Fig. 2 represents a potentiodynamic plot for 7075-T6 aluminum immersed in a 3.5% NaCl solution containing 0.05% $MgCrO_4$. Note the reduction in the corrosion current experienced by the cathodic lobe B of the plot, while the anodic lobe A remains essentially the same with reference to the impressed voltage.

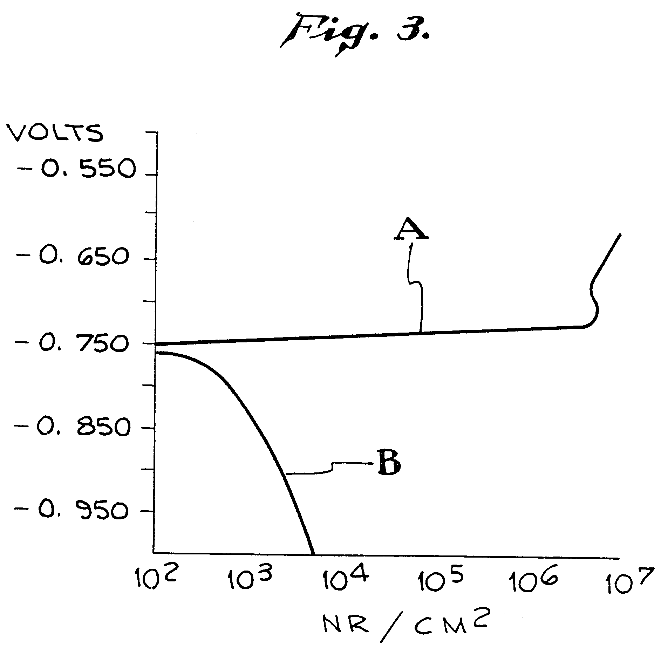

Fig. 3 is a potentiodynamic plot for 7075-T6 aluminum immersed in a solution of 3.5% NaCl and a sufficient amount of the unseparated reaction product of sodium molybdate and cerous nitrate to provide 0.018% of the cerous molybdate and 0.015% of sodium nitrate. Note the reduction in the corrosion current experienced by the cathodic lobe of the plot. The corrosion rate for this sample was found to be 0.21 mils/yr (5.3μm/yr.) which compares favourably with the corrosion rate of 0.32 mils/yr (8.1μm/yr) experienced by the aluminium treated with a chromate containing inhibitor as shown by Fig. 2.

The cerous molybdate - sodium nitrate mixture used in Fig. 3, in an amount of 1 weight percent, was added to a polysulfide sealant (Mil-S-8802 A2) at the same time the manganese dioxide catalyst was added. The cure rate, as determined by viscosity measurements during the cure period, was virtually identical to that of a control batch of sealant which contained no inhibitor.

In another test, the following Table I represents the fatigue crack growth retardant quality of the inhibitors of the present invention. Center-crack fatigue specimens of 7075-T6 aluminum, four inches wide, 0.1 inches (2.5mm) thick and 16 inches (40.64cm) long were used. A special technique was developed for exposing the cracks to liquids which have the same composition as moisture which as diffused through a film of polysulfide sealant. The polyfulfide sealants. The polysulfide sealants were mixed with a manganese dioxide catalyst and applied to the lower half of a 4-inch (10.16cm) petri dishes to create polysufide sealant films of approximately 1/16 inches (1.59mm) thick. After the polysulfide sealant had cured, 10 ml. of distilled water was placed in each dish. At the end of 72 hours, the liquid, which had leeched inhibitor from the sealant, was decanted for use in the fatigue test.

The test specimens were subject to a tension-tension cycling at 5Hz and the stress concentration at the crack tip (Delta K) was gradually increased from 80-17.5 sq.rt.cm (5.0 to 11.0 KSI/sq.rt.in). The sealant extract was injected into the crack immediately prior to each 10,000 cycle test interval. The crack lengths were optically monitored through a 10 power microscope. The test results are summarized in Table I.

**Table I**
Results of Crack Growth Tests in 7075-T6 Aluminum
Cycled at 5 Hz

| CRACK ENVIRONMENT | CRACK GROWTH PER CYCLE (da/dN) x E-6 INCHES | | | | |
|---|---|---|---|---|---|
| | Delta K (KSI/sq.rt.in.)/(sq.rt.cm) | | | | |
| | 6 | 7 | 8 | 10 | 11 |
| Distilled Water | 4.6 /7.3 | 8.1 /12.9 | 12.4 /19.8 | 23.5/37.5 | 30.9/49.2 |
| Distilled Water + Inhibitor I | 3.2/5.1 | 4.9 /7.8 | 6.9 /11.0 | 11.9/19.0 | 14.2/22.6 |
| Distilled Water + 200 ppm NaCl | 7.6/12.1 | 14.6 /23.3 | 21.7/34.6 | 40.0/63.7 | 52.1/83.0 |
| Distilled Water + 200 ppm NaCl + Inhibitor I | 4.1/42.7 | 5.9/9.4 | 7.0 /11.2 | 11.4 /18.2 | 16.2/25.8 |

Inhibitor I was mixed with the polysulfide sealant in an amount of 3 weight percent, Inhibitor 1 being a mixture of cerous molybdate and ammonium hypophosphite in a weight ratio of 0.5:1.

As can be seen from Table I, the crack growth rate is decreased almost 50% when Inhibitor I is present in the water and from about 60% to over 70% when in the salt solution.

In another test, 7075-T6 aluminum was immersed in 0.35% NaCl aqueous solutions to which was added various inhibitors of the present invention. The corrosion rate was measured and the results are summarized in Table 2 wherein compound "A" is cerous molybdate and compound "B" is ammonium hypophosphite.

**Table II**

| INHIBITOR | CORROSION RATE | |
|---|---|---|
| | mils/yr | $\mu m$/yr |
| 1.  0.5gA, 0.5g B/liter | 1.51 | 38.4 |
| 2.  0.5gA, 1.0g B/liter | 0.95 | 24.1 |
| 3.  0.5gA, 1.5g B/liter | 1.16 | 29.5 |
| 4.  0.5gA, 0.7g B/liter | 1.69 | 42.9 |
| 5.  0.5gA, 0.5g B, 0.5g ZnCl/liter | 0.29 | 7.4 |

We have also devised another test to measure corrosion resistance. This test simulates a joint between the surfaces of two dissimilar materials and allows the entrance of the environment, permanently, into the interface, under conditions not unlike those experienced by structures in marine environments where collection of salt and water in joints is essentially irreversible. The driving potential of the coupled metals is also an important factor in increasing the corrosive attack by chemically reducing oxygen and water to form sodium hydroxide in close proximity to the aluminum surface rather than being washed away in salt spray. The nature of the observed corrosion parallels closely that found in the field, such as in operational aircraft. The specific test used by us is as follows:

Two inch by five inch panels (5.04cm X 12.7cm) of untreated aluminum alloy, 7075-T6 are coated with five .02" X 1/2" / 2" (10.05 X 1.27cm/5.04cm) strips of sealant, each strip separated from the adjacent strip by a 1/2" (1.27cm) band of an uncoated section of the aluminum. A candidate test metal (i.e. cadmium plated steel) of similar dimensions to the aluminum panel is pressed against the sealant coated side of the aluminum and held together by adhesive or masking tape on the ends leaving the 5″ (12.7cm) sides exposed. (Panels are coated on the back side with an insulating film where electrical measurements are to be made.) This sandwich type assembly is one half immersed in a trough of 3% salt water, edgewise, along its 5″ (12.7cm) length.

The trough is open to the atmosphere but loosely covered to limit water evaporation. To encourage galvanic corrosion, the metal couples are connected with alligator clips to induce corrosive current flow between the dissimilar metals. Salt water and oxygen diffuse into the cavities introduced by the 20 mil ( 508μm) thick sealant into the 1/2″ (1.27cm) spacings. The shorted circuits may be opened at intervals to measure voltage and current flows with sensitive voltammeters or a Wheatstone bridge and finally examined for corrosion and undercutting of sealant on the inside surfaces of the cell sandwich.

In order to compare the effectiveness of ammoniun phosphates and phosphites against various other salts as inhibitor the following elastomeric sealant was used wherein the Polysulfide Polymer is manufactured and sold as Thiokol LP-32 by Morton Thiokol Chemical Corporation, Chicago, Illinois. LP-32 has the formula $HS(RSS)_n RSH$ wherein R is $-C_2H_4-O-CH_2-O-C_2H_4-$ and the value of n is such that the molecular weight is 4,000.

## ELASTOMERIC SEALANT

| Compound | Parts By Weight |
|---|---|
| Polysulfide Polymer (LP-32) | 100 |
| Calcium Carbonate (filler) | 50 |
| Phenolic Adhesion Promoter (2,4- diallyl phenol) | 3 |
| Salt Inhibitor | Variable |

To the above sealant composition was added 7 parts by weight of Manganese Dioxide catalyst having about 1 weight percent of sodium hydroxide, the catalyst being dispersed in eight parts by weight of hydrogenated terphenyl (Monsanto HB-40).

TABLE COMPARING ANTI-CORROSIVE BEHAVIOR OF
POTENTIAL INHIBITORS In a Polysulfide Base
Using an Aluminum-Cadmium Couple

| Inhibitor | Time Immersed | Weight % Inhibitor | Results |
|---|---|---|---|
| None | 3 days | -- | Severe pitting of aluminum |
| None | 21 days | -- | Severe pitting. Heavy corrosion products between sealant strips and under sealant. Adhesion loss. Steel rusting under cadmium plate. |
| Calcium molybdate | 7 days | 5 | Severe pitting and corrosion of aluminum. Loss of adhesion. |
| Sodium molybdate | 7 days | 5 | Extremely severe corrosion of aluminum. |
| Magnesium chromate | 21 days | 5 | Aluminum alloy and cadmium shiny, unchanged. |
| Sodium Hypo phosphite | 7 days | 5 | Severe pitting and corrosion of aluminum |
| Sodium phosphate | 3 days | 5 | Extremely severe attack of aluminum |

In addition to the galvanic-crevice corrosion cells employing aluminum alloy-cadmium couple, several other metals were coupled with the same aluminum alloy coated with strips of inhibited and uninhibited Thiokol polysulfide sealant with the following results:

### TABLE SHOWING EFFECT OF VARIOUS INHIBITORS
### IN A POLYSULFIDE BASE ON CORROSION OF ALUMINUM
### ALLOY 7075-T6 COUPLED WITH VARIOUS AIRCRAFT
### CONSTRUCTION MATERIALS

| Inhibitor | Days/ Time | % Conc. | Couple | Visual Results |
|---|---|---|---|---|
| None | 7 | -- | Al-Ti | Severe destruction of aluminum sealant. Blistered. |
| None | 7 | | Al-C | Very Severe destruction of aluminum. Adhesion loss. |
| None | 7 | | Al-stainless | Worse attack than with titanium - Sealant largely destroyed |
| $MgCrO_4$ | 21 | 5 | Al-Ti | Aluminum attack but less than without inhibitor |
| $MgCrO_4$ | 21 | 5% | Al-stain-less steel | Little or no improvement over no inhibitor |
| $MgCrO_4$ | 7 | 5 | Al- carbon | No benefit over no inhibitor. Very severe aluminum loss |

While the aluminum usually shows no visual localized attack, in order to have a more quantitive evaluation of overall metal corrosion, the corrosion cells were opened at intervals and the current flow measured with a high impedance meter with the following results:

### TABLE III GIVING OBSERVED CURRENT FLOWS
### OF ALUMINUM-CADMIUM AND ALUMINUM-TITANIUM
### CELLS WITH TIME CURRENT IN MICRO AMPS

| Time couple | No Inhibitor | Magnesium Chromate |
|---|---|---|
| Al-Cd | | |
| Initial 1 day | 11 | 13.0 |
| Average 21 days | 14 | 7.94 |
| Final (21 days) | 25 | 6.1 |
| Al-Ti | | |
| 1 day | 55 | 45.0 |
| Average 21 days | 65 | 33.3 |
| Final (21 days) | 75 | 29.0 |

The amount of magnesium chromate was 5 wt.%.

## TABLE IV GIVING OBSERVED CURRENT FLOWS OF ALUMINUM-CADMIUM AND ALUMINUM TITANIUM CELLS

| Time | Magnesium Chromate | Cerous Molybdate + Ammonium Dihydrogen Phosphate |
|---|---|---|
| Al-Cd | | |
| 8 days | 9.0 | 14.0 |
| 25 days | 6.6 | 1.02 |
| Al-Ti | | |
| 8 days | 30 | 65 |
| 25 days | 29 | 58 |

The amount of each inhibitor was 5 weight percent and the mixture contained 3 parts by weight of ammonium dihydrogen phosphate and 1 part by weight of cerous molybdate.

## Claims

1. A method of inhibiting corrosion at a joint between two metal parts when exposed to aqueous salt solutions, the said joint being present between the opposing mating surfaces of said metal parts, which comprises filling said joint with a liquid polymer composition curable to a solid sealant elastomer, said composition consisting essentially of a liquid polymer curable to a solid elastomeric sealant, said liquid polymer having incorporated therein a corrosion and crack growth inhibitive amount of cerous molybdate or a mixture of cerous molybdate and at least one water soluble ammonium salt of ortho-, meta- or hypophosphoric acid or ortho- or hypophosphorous acid.

2. A method according to claim 1, wherein said liquid polymer is polysulphide, polyurethane, polythioether or polyether.

3. A method according to claim 1 or 2, wherein said liquid polymer is mercaptan terminated.

4. A method as claimed in any preceding claim, wherein at least one of said metal parts is aluminium.

5. A method according to claim 4, wherein one of said metal parts is aluminium and the other metal part is a dissimilar metal.

6. A method as claimed in any preceding claim, wherein said mixture is incorporated in said liquid polymer.

7. A method as claimed in claims 1 through 5, wherein cerous molybdate is incorporated into said liquid polymer.

8. A method as claimed in any preceding claim, wherein zinc chloride is incorporated into said liquid polymer.

9. A method according to any preceding claim, wherein said liquid polymer contains a curing catalyst.

10. A method as claimed in to claims 3 through 6, wherein said liquid polymer contains an alkaline oxidation catalyst.

11. A method according to claim 10, wherein the catalyst is alkaline manganese dioxide.

12. A corrosion and/or crack growth inhibiting coating and sealing composition for application to metal surfaces comprising

EP 0 429 180 B1

(a) liquid polymer curable to a solid elastomer, and
(b) cerous molybdate, or
(c) cerous molybdate and at least one water soluble ammonium salt of ortho-, meta- or hypophosphoric acid or ortho- or hypophosphorous acid, components (c) or (b) being present in a corrosion and/or crack growth inhibitive amount.

13. A composition as claimed in claim 12, wherein said ammonium salt is absent and the cerous molybdate is present in amount of from 0.1 to 10 weight percent, preferably 1 to 5 weight percent of the liquid polymer.

14. A composition as claimed in claim 13, which additionally contains zinc chloride.

15. A composition as claimed in claim 12, wherein said cerous molybdate and said ammonium salt are both present, the ratio of cerous molybdate to ammonium salt being from 0.5:2 to 2:0.5.

16. A composition as claimed in claim 12 or 15, wherein said ammonium salt is selected from ammonium orthophosphate and ammonium phosphite.

17. A composition as claimed in any one of claims 12 to 16, wherein said liquid polymer is selected from polysulphide, polyurethane, polythioether and polyether polymers.

18. A composition as claimed in claim 17, wherein the liquid polymer is mercaptan terminated.

19. A composition as claimed in any one of claims 12 to 18 which contains a polymer curing catalyst.

20. A composition as claimed in claim 19 which contains an alkaline oxidation catalyst.

21. A composition as claimed in claim 20, wherein a catalyst is alkaline manganese dioxide.


**Patentansprüche**

1. Verfahren zur Verhinderung der Korrosion einer Verbindung zwischen zwei Metallteilen, wenn sie wäßrigen Salzlösungen ausgesetzt ist, wobei die Verbindung zwischen gegenüberliegenden Paßflächen der Metallteile liegt, umfassend
das Füllen der Verbindung mit einer flüssigen Polymerzusammensetzung, die zu einer festen Elastomer-Dichtungsmasse härten kann, wobei die Zusammensetzung im wesentlichen aus einem flüssigen Polymer besteht, das zu einer festen Elastomer-Dichtungsmasse härten kann,
das flüssige Polymer eine korrosions- und rißwachstumshemmende Menge eines Cermolybdats oder einer Mischung aus Cermolybdat und mindestens einem wasserlöslichen Ammoniumsalz der Ortho-, Meta- oder Hypophosphorsäure oder einer Ortho- oder Hypophosphorsäure enthält.

2. Verfahren nach Anspruch 1, wobei das flüssige Polymer Polysulfid, Polyurethan, Polythioether oder Polyether ist.

3. Verfahren nach Anspruch 1 oder 2, wobei das flüssige Polymer endständig ein Mercaptan hat

4. Verfahren nach irgendeinem vorhergehenden Anspruch, wobei mindestens eines der Metallteile Aluminium ist.

5. Verfahren nach Anspruch 4, wobei eines der Metallteile Aluminium ist und das andere Metallteil aus einem anderen Metall ist.

6. Verfahren nach irgendeinem vorhergehenden Anspruch, wobei die Mischung dem flüssigen Polymer beigemengt wird.

7. Verfahren nach den Anspüchen 1 bis 5, wobei Cermolybdat im flüssigen Polymer enthalten ist.

8. Verfahren nach irgendeinem vorhergehenden Anspruch, wobei Zinkchlorid dem flüssigen Polymer beigemengt wird.

11

**9.** Verfahren nach irgendeinem vorhergehenden Anspruch, wobei das flüssige Polymer einen Härtungskatalysator enthält.

**10.** Verfahren nach den Ansprüchen 3 bis 6, wobei das flüssige Polymer einen alkalischen Oxidationskatalysator enthält.

**11.** Verfahren nach Anspruch 10, wobei der Katalysator alkalisches Magnesiumdioxid ist.

**12.** Korrosions- und/oder rißwachstumshemmende Beschichtungs- und Dichtungszusammensetzung zur Anwendung auf Metalloberflächen, enthaltend
   (a) flüssiges Polymer, das zu einem festen Elastomer härtet, und
   (b) Cermolybdat, oder
   (c) Cermolybdat und mindestens ein wasserlösliches Ammoniumsalz einer Ortho-, Meta- oder Hypophosphorsäure oder eine Ortho- oder Hypophosphatsäure,
worin die Bestandteile (c) oder (b) in einer korrosions- und/oder rißwachstumshemmenden Menge vorliegen.

**13.** Zusammensetzung nach Anspruch 12, worin das Ammoniumsalz nicht und das Cermolybdat in einer Menge von 0,1 bis 10 Gew.% vorhanden ist, vorzugsweise in 1 bis 5 Gew.% des flüssigen Polymers.

**14.** Zusammensetzung nach Anspruch 13, die zudem Zinkchlorid enthält.

**15.** Zusammensetzung nach Anspruch 12, worin das Cermolybdat und das Ammoniumsalz vorhanden sind und das Verhältnis von Cermolybdat zu Ammoniumsalz 0,5:2 bis 2:0,5 beträgt.

**16.** Zusammensetzung nach Anspruch 12 oder 15, worin das Ammoniumsalz ausgewählt ist aus Ammoniumorthophosphat und Ammoniumphosphit.

**17.** Zusammensetzung nach einem der Ansprüche 12 bis 16, worin das flüssige Polymer ausgewählt ist aus Polysufid, Polyurethan, Polythioether und Polyetherpolymeren.

**18.** Zusammensetzung nach Anspruch 18, worin das flüssige Polymer endständig Mercaptan hat.

**19.** Zusammensetzung nach einem der Ansprüche 12 bis 18, die einen Polymer-Härtungskatalysator enthält.

**20.** Zusammensetzung nach Anspruch 19, die einen alkalischen Oxidationskatalysator enthält.

**21.** Zusammensetzung nach Anspruch 20, worin ein Katalysator alkalisches Magnesiumdioxid ist.


**Revendications**

**1.** Procédé pour inhiber la corrosion au niveau d'un joint entre deux pièces métalliques lorsque celles-ci sont exposées à des solutions aqueuses de sels, ledit joint étant situé entre les surfaces complémentaires opposées desdites pièces métalliques, lequel procédé comporte le fait de combler ledit joint avec une composition de polymère liquide qui peut durcir pour donner un matériau solide élastomère d'étanchéité, ladite composition comprenant essentiellement un polymère liquide qui peut durcir pour donner un matériau solide élastomère d'étanchéité, ledit polymère liquide contenant, incorporée en son sein, une certaine quantité, suffisante pour inhiber la corrosion et la propagation de fissures, de molybdate céreux ou d'un mélange de molybdate céreux et d'au moins un sel hydrosoluble d'ammonium et d'acide orthophosphorique, métaphosphorique, hypophosphorique, orthophosphoreux ou hypophosphoreux.

**2.** Procédé conforme à la revendication 1, dans lequel ledit polymère liquide est un polysulfure, un polyuréthane, un polythioéther ou un polyéther.

**3.** Procédé conforme à la revendication 1 ou 2, dans lequel ledit polymère liquide porte des groupes terminaux mercaptan.

**4.** Procédé conforme à l'une des revendications précédentes, dans lequel au moins l'une desdites pièces métalliques est en aluminium.

5. Procédé conforme à la revendication 4, dans lequel l'unes desdites pièces métalliques est en aluminium et l'autre est en un métal différent.

6. Procédé conforme à l'une des revendications précédentes, dans lequel ledit mélange est incorporé dans ledit polymère liquide.

7. Procédé conforme à l'une des revendications 1 à 5, dans lequel du molybdate céreux est incorporé dans ledit polymère liquide.

8. Procédé conforme à l'une des revendications précédentes, dans lequel du chlorure de zinc est incorporé dans ledit polymère liquide.

9. Procédé conforme à l'une des revendications précédentes, dans lequel ledit polymère liquide contient un catalyseur de durcissement.

10. Procédé conforme à l'une des revendications 3 à 6, dans lequel ledit polymère liquide contient un catalyseur alcalin d'oxydation.

11. Procédé conforme à la revendication 10, dans lequel le catalyseur est du dioxyde de manganèse alcalin.

12. Composition de revêtement et d'étanchéité, inhibant la corrosion et/ou la propagation de fissures, destinée à être étalée sur des surfaces métalliques, et comprenant :
   a) un polymère liquide qui peut durcir pour donner un matériau élastomère solide, et
   b) du molybdate céreux, ou
   c) du molybdate céreux et au moins un sel hydrosoluble d'ammonium et d'acide orthophosphorique, métaphosphorique, hypophosphorique, orthophosphoreux ou hypophosphoreux,
   le composant (b) ou (c) étant présent en une quantité suffisante pour inhiber la corrosion et/ou la propagation de fissures.

13. Composition conforme à la revendication 12, dans laquelle il n'y a pas de sel d'ammonium et le molybdate céreux se trouve en une quantité représentant de 0,1 à 10 % en poids, et de préférence de 1 à 5 % en poids, du polymère liquide.

14. Composition conforme à la revendication 13, qui contient en outre du chlorure de zinc.

15. Composition conforme à la revendication 12, dans laquelle il y a à la fois du molybdate céreux et dudit sel d'ammonium, le rapport du molybdate céreux au sel d'ammonium valant de 0,5/2 à 2/0,5.

16. Composition conforme à la revendication 12 ou 15, dans laquelle ledit sel d'ammonium est choisi parmi de l'orthophosphate d'ammonium et du phosphite d'ammonium.

17. Composition conforme à l'une des revendications 12 à 16, dans laquelle ledit polymère liquide est choisi parmi les polymères de types polysulfure, polyuréthane, polythioéther et polyéther.

18. Composition conforme à la revendication 17, dans laquelle ledit polymère liquide porte des groupes terminaux mercaptan.

19. Composition conforme à l'une des revendications 12 à 18, qui contient un catalyseur de durcissement du polymère.

20. Composition conforme à la revendication 19, qui contient un catalyseur alcalin d'oxydation.

21. Composition conforme à la revendication 20, dans laquelle le catalyseur est du dioxyde de manganèse alcalin.

Fig. 1.

Fig. 2.

# Fig. 3.